# EUROPÄISCHE PATENTANMELDUNG

(11) **EP 1 720 346 A1**
(43) Veröffentlichungstag der Anmeldung: **08.11.2006**
(21) Anmeldenummer: 05103622.6
(22) Anmeldetag: 02.05.2005
(51) Int. Cl.: H04N 5/445

(54) **Verfahren zur Datenübertragung nach dem DVB-Standard für interaktive Anwendungen**

(71) Anmelder: SIEMENS AKTIENGESELLSCHAFT, 80333 München (DE)
(72) Erfinder: Vizaei, Mohammad, 1220, Wien (AT)
(74) Vertreter: Berg, Peter

(57) **Zusammenfassung**

Die Erfindung betrifft ein Verfahren zur Datenübertragung nach dem DVB-Standard, bei dem neben Video- und/oder Audiodaten auch Daten für Anwendungen übertragen werden. Bei diesem Verfahren wird für die Ausstrahlung der Video- und/oder Audiodaten eine Sprache gewählt und dann werden auch die Daten von der jeweiligen Anwendung in der gewählten Sprache angezeigt.

Die mit der Erfindung erzielten Vorteile bestehen insbesondere darin, dass ein Zuseher, der die Landessprache des Senders nicht beherrscht, nun nicht nur das ausgestrahlte Programm in der von ihm gewählten Sprache sehen kann, sondern ihm auch die Zusatz-Anwendungen in der gewählten Sprache zur Verfügung gestellt werden. Dadurch wird eine höhere Zuseherbindung an den Fernsehkanal erreicht, weil der Zuseher auch die Zusatz-Anwendungen nutzen kann.

## Beschreibung

Die Erfindung betrifft ein Verfahren zur Datenübertragung nach dem DVB-Standard, bei dem neben Video- und/oder Audiodaten auch Daten zu Anwendungen übertragen werden.

Fernsehen ist wie auch das Radio ein Massenmedium. Das Fernsehen wurde seit den 1950er Jahren in den Industriestaaten zu dem Leitmedium. So besaßen im Jahr 2003 94,4% der deutschen Haushalte ein Fernsehgerät. Aus technischer Sicht werden für das Fernsehen üblicherweise elektromagnetische Wellen genutzt. Die Übertragung von Bild und Ton durch diese elektromagnetischen Wellen kann dabei terrestrisch über terrestrische Frequenzen, mit Hilfe von Satelliten nicht-terrestrisch über Satellitenfrequenzen oder in über Koaxialkabeln erfolgen. Nach der gewählten Übertragungsform wird dann von terrestrischen Antennenfernsehen, Satellitenfernsehen oder vom Kabelfernsehen gesprochen.

Im Bereich des Antennen- und des Kabelfernsehens ist bis heute eine analoge Übertragung der Informationen - das heißt die Signale werden zeitlich und im Wert kontinuierlich übertragen - üblich, obwohl die Aufnahme und Bearbeitung der Video- und/oder Audiodaten schon seit einigen Jahren digital erfolgt.

Nach der allgemeinen Einführung des Fernsehens (in Deutschland 1952), der Farbe, Übertragung via Kabel und Satellit (1980er) ist die Digitalisierung der Übertragung von Bild- und Tondaten der nächste technische Evolutionsschritt. Dabei werden unter digitalem Fernsehen sowohl eine Ausstrahlung von Video- und Audiodaten des konventionellen Programmangebotes des Fernsehens in digitalisierter Form als auch ein mögliches Angebot neuartiger Anwendungen wie beispielsweise Untertitel, Teletext, Electronic Program Guide (EPG), etc. verstanden.

Die bedeutendsten Eigenschaften des digitalen Fernsehens werden darin gesehen, dass digitale Signale nahezu ohne Informationsverlust übertragen und komprimiert werden können. Da die meisten herkömmlichen Empfangsgeräte nicht direkt das digitalen Signal verarbeiten können, wird zum Empfang des digitalen Fernsehens ein zusätzlicher Digital-Decoder - eine so genannte Set-Top-Box - oder ein geeignetes Fernsehgerät benötigt, in welches der Decoder genauso wie das heute übliche analoge Empfangsteil für analoges Fernsehen bereits integriert ist.

Die Übertragung des digitalen Fernsehens wird meist nach dem so genannten DVB-Standard durchgeführt, wobei die Abkürzung DVB für Digital Video Broadcasting steht. Als DVB werden standardisierte Verfahren zur Übertragung von digitalen Inhalten wie beispielsweise Video- sowie Audiodaten für Fernsehen und Radio, für Mehrkanalton und für interaktive Zusatz-Anwendungen wie z.B. Untertitel, Teletext, Electronic Program Guide (EPG), etc. durch digitale Technik bezeichnet.

DVB wird für die unterschiedlichen Übertragungswege in mehrere technische Unterarten unterteilt, die hauptsächlich durch das Modulationsverfahren, dessen optimaler Wert entscheidend vom Frequenzbereich abhängig ist, und durch die Fehlerkorrektur unterschieden werden. Es gibt daher DVB-S für die Übertragung durch direktstrahlende Satelliten, DVB-C für die Übertragung über Kabelnetze, DVB-T für die Übertragung durch terrestrische Senderketten im VHF- bzw. UHF-Bereich und DVB over IP, bei dem vom so genannten Internet Protokoll für die Übertragung Gebrauch gemacht wird.

Ausgehend von DVB wurde von der europäischen Industrie der so genannte Multimedia Home Platform (MHP)-Standard als Basis für interaktives digitales Fernsehen entwickelt. Der MHP-Standard soll von (Fernseh-)Programmanbietern, Engeräteherstellern und Netzbetreibern eingesetzt werden, um eine gemeinsame interaktive Basis liefern zu können. Denn unabhängig vom Hersteller wird von MHP für alle Anwendungen eine offene Schnittstelle geboten. Durch diese Schnittstelle soll die technisch ungehinderte Nutzung aller Zusatzangebote vom Electronic Program Guide (EPG) - zu deutsch auch elektronische Programmzeitschrift - bis zu Börsekursen, Nachrichten und Bestellungen im E-Commerce garantiert werden.

Durch MHP wird die Schnittstelle zwischen der Software eines Digital-Decoders und interaktiven Zusatz-Anwendungen standardisiert. MHP basiert auf der Programmiersprache Java. Die Plattform ermöglicht auch Anwendungen, die über Radio und Fernsehen in der bisherigen Form hinausgehen, wie beispielsweise Electronic Program Guide (EPG), interaktive Anwendungen mit Rückkanal oder Internet-Zugänge. Auf der Empfängerseite wird der Anschluss unterschiedlicher End- und Peripherie-Geräte (z.B. Set-Top-Box, TV-Gerät mit integriertem Decoder, Mulitmedia-PC, Drucker, etc.) unterstützt.

Zusätzlich wird im Zusammenhang mit dem Fernsehen Mehrkanalton benutzt, was bedeutet, dass das Fernsehprogramm in verschiedenen Audioversionen ausgestrahlt wird, wie zum Beispiel in zwei verschiedenen Sprachen. Vom Zuseher kann dann beispielsweise eine der zwei Sprachen gewählt werden, in der das Programm von ihm dann gesehen werden kann. Besonders der heutige Stand des digitalen Fernsehens, bei welchem DVB-Technologie eingesetzt wird, ermöglicht es, neben einem Video-Kanal auch einen oder mehrere Audio-Kanäle auszustrahlen.

Wird nun beispielsweise von einem Nutzer eine bestimmte Sprache für das vom Fernsehsender ausgestrahlte Programm ausgewählt, so wird ihm zwar das Programm wie z.B. Filme oder Sportübertragungen in der gewünschten Sprache angeboten. Alle anderen Zusatz-Anwendungen wie z.B. Untertitel, Zusatztexte, Teletext, EPG, etc. werden aber nur in einer Sprache - meist der Landessprache des Senders - gesendet, wodurch sie nur von Zusehern, die diese Sprache beherrschen, genutzt werden können. Es besteht für den Zuseher damit nur eine Sprachwahl für das ausgestrahlte Programm wie z.B. Filme, Sportübertragungen, etc.

Der vorliegenden Erfindung liegt daher die Aufgabe zugrunde, ein Verfahren anzugeben, durch welches eine Mehrsprachigkeit der angebotenen Zusatz-Anwendungen ermöglicht und die Zusatz-Anwendungen auf die für das Programm gewählte Sprache umgeschaltet wird.

Die Lösung der Aufgabe erfolgt erfindungsgemäß mit einem Verfahren zur Datenübertragung nach dem DVB-Standard, bei dem neben Video- und/oder Audiodaten auch Daten zu Anwendungen übertragen werden, wobei für eine Ausstrahlung der Video- und/oder Audiodaten eine Sprache gewählt wird, und dann die Daten zu der jeweiligen Anwendung in dieser gewählten Sprache angezeigt werden.

Die mit der Erfindung erzielten Vorteile bestehen insbesondere darin, dass ein Zuseher, der die Landessprache des Senders nicht beherrscht, nun nicht nur das ausgestrahlte Programm in der von ihm gewählten Sprache sehen kann, sondern ihm auch die Zusatz-Anwendungen in der gewählten Sprache zur Verfügung gestellt werden. Dadurch wird eine höhere Zuseherbindung an den Fernsehkanal erreicht, weil der Zuseher auch die Zusatz-Anwendungen nutzen kann.

Es ist vorteilhaft, wenn Daten zu der jeweiligen Anwendung gemäß dem MHP-Standard übertragen werden, da vom MHP-Standard einerseits eine standardisierte, vom Hersteller unabhängige und offene Schnittstelle für alle Anwendungen geboten wird und durch MHP auch interaktive Anwendungen mit Rückkanal geboten werden. Andererseits besteht vor allem beim MHP-Standard die Möglichkeit große Datenmengen übertragen und damit eine Mehrsprachigkeit für Zusatz-Anwendungen anzubieten.

Günstig ist es auch, wenn Texte der Zusatz-Anwendung Teletext in der für die Ausstrahlung der Video- und/oder Audiodaten gewählten Sprache angezeigt werden. Unter Teletext werden meist Textdaten verstanden, die zusätzlich zum Fernsehsignal eines Fernsehsenders in der so genannten Austastlücke übertragen werden, und die in Seiten aufgeteilt sind, die meist aktuelle Nachrichten enthalten. Bei einigen Sendungen werden auch über Teletext Untertitel zur Sendung zur Verfügung gestellt. Werden diese Textdaten nun in der gewählten Sprache angezeigt, so kann der Zuseher die Zusatz-Anwendung Teletext beispielsweise zur Information nutzen.

Vorteilhaft ist es weiterhin, wenn die Zusatz-Anwendung Electronic Program Guide (EPG) in der für die Ausstrahlung der Video- und/oder Audiodaten gewählten Sprache ausgeführt wird, da diese Zusatz-Anwendung von Zuseher dann in der von ihm gewählten Sprache genutzt werden. EPG ist die digitale Variante einer gedruckten Programmzeitschrift, mit deren Hilfe das Fernsehprogramm aller registrierten Fernsehsender angesehen werden kann, wobei bei EPG auch zusätzlich Bilder und Informationen angezeigt und mit Hilfe von EPG auch ein digitaler Videorecorder programmiert werden kann.

Die Erfindung wird anhand einer Figur näher erläutert, welche beispielhaft den Ablauf des erfindungsgemäßen Verfahrens für eine MHP-Zusatz-Anwendung.

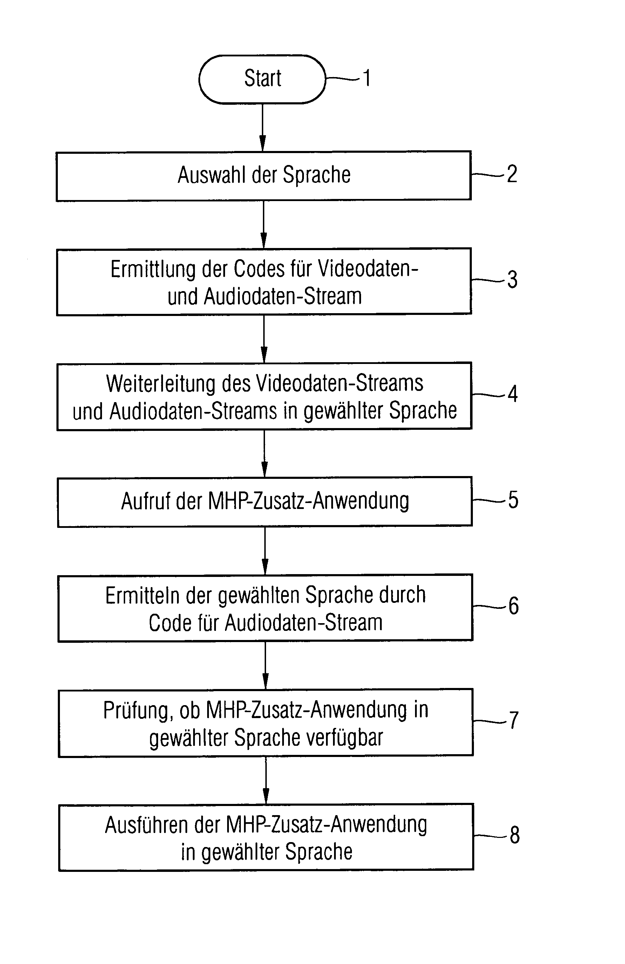

Figur 1 zeigt beispielhaft die Verfahrensschritte für die Übertragung von Daten (Video- und/oder Audiodaten) und einer MHP-Zusatz-Anwendung bei Mehrkanalton für die beiden Sprachen Deutsch und Englisch. Bei DVB-Standard für digitales Fernsehen werden in einem Übertragungskanal gleichzeitig Videodaten, Audiodaten - oft in mehreren Sprachen - und Daten für die MHP-Zusatz-Anwendung gesendet. In der Set-Top-Box werden diese wieder mit Hilfe einer Tabelle - der so genannten Program Map Table - wieder getrennt. In dieser Tabelle befindet sich eine Auflistung verwendeter Codes, mit deren Hilfe einzelne Datenstreams von der Set-Top-Box auseinander gehalten werden können. Dadurch können zu einem Videodaten-Stream eine Auswahl von verschiedenen Audiodaten-Streams an die Set-Top-Box gesendet werden.

Das Verfahren beginnt mit einem Startschritt 1. Wird in einem dem Verfahrensschritt 1 folgenden zweiten Schritt 2 von Zuseher eine der beiden Sprachen - beispielsweise Englisch - für die Ausstrahlung einer Fernsehsendung ausgewählt, so wird in einem dritten Schritt 3 von der Set-Top-Box mit Hilfe des Program Map Tables der Code für den Videodaten-Stream sowie der Code für den Audiodaten-Stream in englischer Sprache ermittelt. In einem vierten Schritt 4 wird dann der Videodaten-Stream mit dem Audiodaten-Stream in englischer Sprache von der Set-Top-Box an das TV-Gerät weitergeleitet, damit die Sendung vom Zuseher in englischer Sprache angesehen werden kann.

Wird nun vom Zuseher in einem fünften Schritt 5 die MHP-Zusatz-Anwendung aufgerufen, so wird in einem sechsten Schritt 6 der Code für den Audiodaten-Stream und damit die gewählte Sprache Englisch ermittelt. In einem siebten Schritt 7 wird geprüft, ob die MHP-Zusatz-Anwendung in der gewünschten Sprache Englisch zur Verfügung steht, damit in einem achten Schritt 8 diese Zusatz-Anwendung bei Verfügbarkeit in Englisch ausgeführt und dem Zuseher in Englisch angezeigt wird.

## Patentansprüche

1. Verfahren zur Datenübertragung nach dem DVB-Standard, bei dem neben Video- und/oder Audiodaten auch Daten für Zusatz-Anwendungen übertragen werden, **dadurch**
**gekennzeichnet, dass** für eine Ausstrahlung der Video- und/oder Audiodaten eine Sprache gewählt wird, und dass dann die Daten für die jeweilige Zusatz-Anwendung in dieser gewählten Sprache angezeigt werden.

2. Verfahren nach Anspruch 1, **dadurch gekennzeichnet, dass** die Daten für die jeweilige Zusatz-Anwendung gemäß dem MHP-Standard übertragen werden.

3. Verfahren nach einem der Ansprüche 1 bis 2, **dadurch gekennzeichnet, dass** Texte der Zusatz-Anwendung Teletext in der für die Ausstrahlung der Video- und/oder Audiodaten gewählten Sprache angezeigt werden.

4. Verfahren nach einem der Ansprüche 1 bis 3, **dadurch gekennzeichnet, dass** die Zusatz-Anwendung Electronic Program Guide in der für die Ausstrahlung der Video- und/oder Audiodaten gewählten Sprache ausgeführt wird.
